# EUROPEAN PATENT APPLICATION

(11) **EP 1 469 651 A2**
(43) Date of publication of application: **20.10.2004**
(21) Application number: 03012192.5
(22) Date of filing: 04.06.2003
(51) Int. Cl.: H04L 29/06, H04L 12/26, G06F 1/00

(54) **Computer network leakage detection**

(30) Priority: 17.04.2003 EP 03008752
(71) Applicant: CC CompuNet Computer AG & Co. oHG, 45127 Essen (DE)
(72) Inventor: von Wallenberg, Philipp, 45127 Essen (DE)
(74) Representative: VOSSIUS & PARTNER

(57) **Abstract**

The present invention relates to a method of detecting, locating and identifying leakages in a computer network, comprising the steps of: (a) setting a host route into the client to be tested for a first host; (b) contacting the client from said first host for communicating from said first host with the client; and (c) contacting the client from a second host being different from said first host for communicating from said second host with the client.

## Description

The present invention relates to a method for detecting, locating and identifying of leakages in computer networks.

Large companies use a number of LAN and WAN networks transporting IP (Internet Protocol) packets as their core network protocol. Most companies have connections to the internet to offer internet services to their employees and B2B or B2C services to their customers or business partners. To protect the corporate network against attacks from the internet, the internet connection is typically secured by using sophisticated firewalling, content inspection and intrusion detection technologies. This results in limitations - either in bandwidth or in allowed services - of the internet services provided to the employees. To circumvent these limitations, employees connect their IT equipment directly to the internet while being connected to the corporate network in parallel. This is done either by directly dialling into the internet by modem connection or by using routers and DSL-connections thus enabling direct internet access for a whole network segment. This bypass is neither wanted nor allowed by the central corporate infrastructure division. In most cases, direct internet access is prohibited, but there are no technical mechanisms in place to detect and terminate these unwanted connections. In most cases, there are no software modules handy, that can be installed on all versions of operating systems used by the employees detecting an unwanted internet connection. And in most cases, there is no control of the installed telecommunication equipment, so there is no way to detect an unapproved internet connection, neither from the client side nor from the telecommunication side.

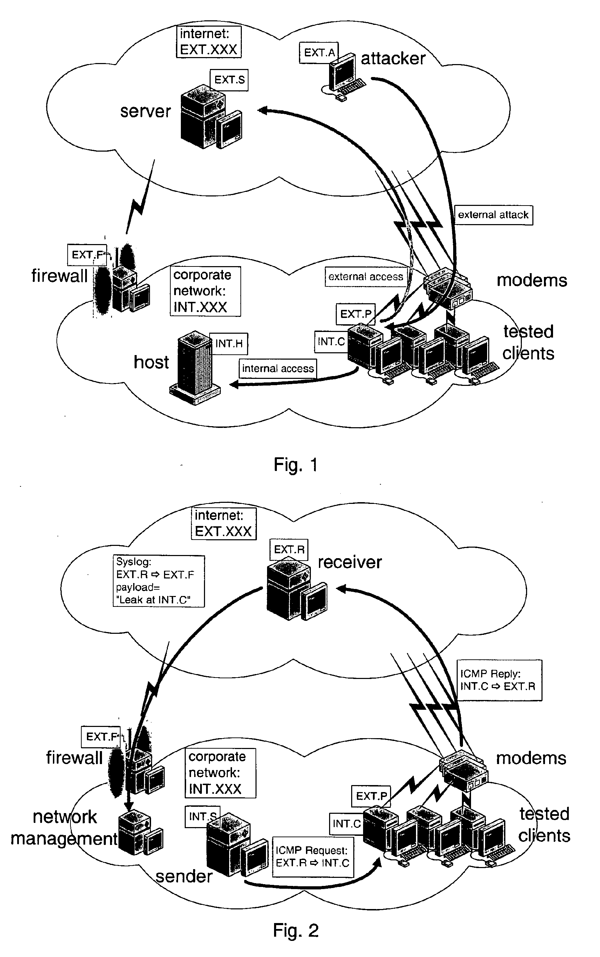

Fig. 1 visualizes this scenario. The corporate network with its clients and host computer is connected to the internet via a firewall (IP address EXT.F). This is the official connection between the company and the internet, authorized by the company. However, in case employees install their own modems in order to obtain a faster connection from their individual computer to the internet and the servers (EXT.S) there, the corporate network is suddenly vulnerable to external attacks (EXT.A). The external access from the corporate network to the internet no longer takes place solely over the firewalled connection but also via the private modem. An external attack may harm the corporate network via this route.

A solution to this problem is suggested in EP 02 01 2351 (Art. 54 (3) EPC). The basic approach according to EP 02 01 2351 uses the "ICMP echo request / reply" (ICMP = Internet Control Message Protocol) mechanism combined with a source IP address spoofing of the requesters source IP address in order to locate and identify leakages in a computer network. The spoofed source IP address is an official internet IP address, that is a part of the public address space of the internet. A receiver holds this official IP address and is placed on the internet. The traffic flow in detail according to this aspect is shown in Fig. 2:
- A sender creates and transmits ICMP echo requests to all addresses in the corporate network in a cyclic manor, thus "sweeping" through all internal addresses.
- A receiver is sitting on the internet holding the spoofed address and listening for ICMP echo reply packets.
- The destination address of each ICMP echo request packet is a unicast IP address of the internal address space.
- The source address is not an address of the internal address space (i.e., the sender's address) but the official internet address of the listening receiver.
- If the client (i.e., the computer of the employee under surveillance) is not connected to the internet via an unauthorized connection, the client will send the ICMP echo reply to its default gateway. The default gateway does not have a route for the spoofed address (because the source address in the packet is the address of the external listening receiver) and thus discards the packet.
- If the client is connected to the internet via an unauthorized connection, i.e. a private modem, it will send the packet to the internet via this connection because the client's default gateway points to the internet. Hence, the receiver will get packages with the source address of the leaky client. By this source address, which is part of the internal network range of the corporate, the leak is detected, and the leaky client is located and subsequently identifiable.

This approach works fine as long as the client is directly connected to the internet. But as for example DSL is widely implemented, some branch offices, for example, of a company use DSL against the corporate internal rules as an alternative to the corporate internet services to give internet access to all users on a subnet in that branch office. The default gateways of the clients are changed to the DSL router and the DSL router is configured with a route for the internal network INT.xxx that points to the old official default gateway. The first DNS entry is set to the internal corporate DNS, the secondary to the internet provider's DNS to look at both DNS trees, the internal and the external. By doing so, clients can access the internet directly while still connecting to all corporate resources in parallel.

When using the above described first approach for such a specific configuration, the external receiver unit still gets the ICMP echo reply packets from the clients, but the source address of the leaky client is automatically replaced by the official address of the DSL router. Hence, the information of the client identity is lost. The only way to get to the leaky clients would be to force the provider to reveal the identity of the owner of that particular DSL contract. This is costly and moreover time consuming. A direct and immediate reaction cannot take place.

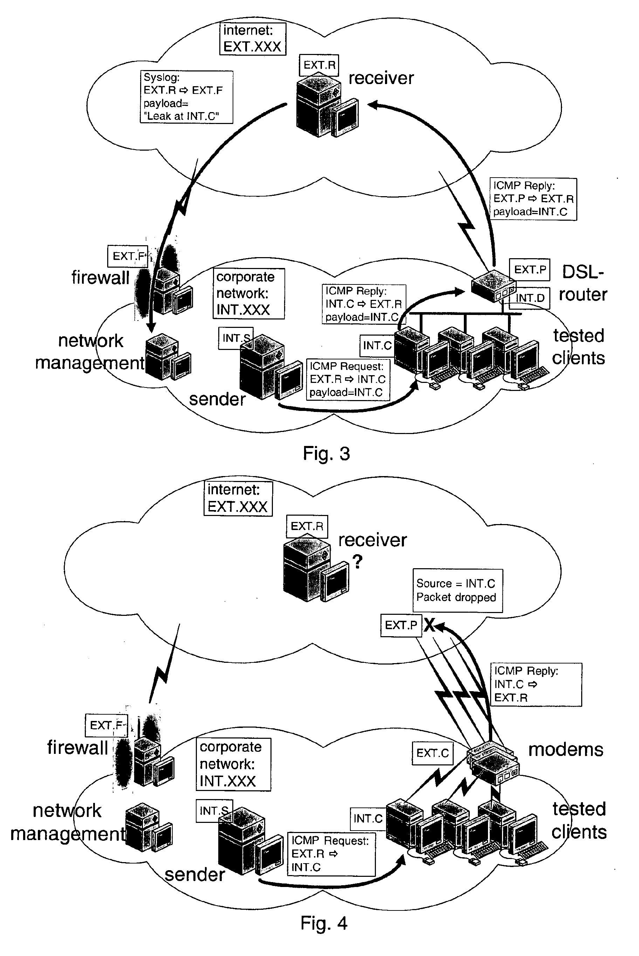

Hence, according to a second aspect suggested in EP 02 01 2351, a sender unit within said computer network transmits a request signal to at least one client computer of said computer network, said request signal containing as source address the IP address of a receiver unit (monitoring unit) external to said computer network and as payload the IP address of the tested/requested client computer. This is shown in accompanying Fig. 3. Hence, this approach starts out from the basic idea of encapsulating the IP address of the tested client into the ICMP packet. This is preferably done by writing the clients IP address - and an optional digital signature to prove the authenticity - into the payload of the ICMP echo request packet. The client has - according to IP standards - to encapsulate the request payload into its ICMP echo reply packet. Hence, the method according to this approach can be performed with all IP stacks that have implemented ICMP regardless of the operating system or hardware or purpose of the system. The receiver extracts the payload from the ICMP echo reply packet and send it to a management system, for example as a syslog message or a snmp trap (snmp = simple network management protocol). The optional digital signature can prove authenticity to the management system.

Under particular circumstances, however, even said two approaches will not work, as explained in the following. Four different scenarios are briefly discussed.

### Source spoof filtering in the corporate network

This is typically not done, as it is complicated. Either manual filters must be configured, which might have to change in all routers, if the network changes. Or the feature "Unicast Reverse Routing" must be used, which accepts only IP packets on an interface, if the reverse route (the route to the source address of that packet) points out of the ingress interface. If the routing is not totally symmetric, undesired packet discarding occurs.

### The client uses a personal firewall

If the user buys and installs a personal firewall on the client and if the personal firewall is configured to block ICMP requests, the clients IP stack will not receive the ICMP request and it will not answer to that request.

If this is the case, the client uses a level of security like it is used for travelling users using a VPN connection from the internet to the corporate network. The client is protected against direct attacks but not against malicious content. As virus scanners are the default protection against malicious content, the situation of a user dialling into the internet with a personal firewall is still unsatisfying, but rare and not that problematic as it would be without any protection.

### An illegal application proxy is used

If the illegal internet connection is not a routing based one but an application proxy based one, which are typically used in a demilitarised zone, the client will reply to the ICMP request, but it will send the reply to the internal default gateway. The internal router holding that gateway does not have a route for the external address and will discard that reply packet. If this is the case, the application proxy will reply to the ICMP reply to the internet, when it receives it's ICMP request with the spoofed source IP address. Moreover, application proxies are typically not used for an illegal internet breakout, as the basic idea of an illegal internet breakout is to achieve full internet connectivity without limitations to that applications, to which application proxies are existing. There is - for example - no application proxy for Kazaa or WinMX available.

### The provider filters spoofed source IPs

If the illegal internet connection is a modem dialup connection, no source IP NAT will occur. Therefore the client sends a ICMP reply packet to the internet with it's internal IP address as source. If the provider does source IP spoofing filtering, the border router of the provider will discard the packet. Most providers start to use this feature these days to prevent attacks carried out by source spoofing. It is very easy to them, as a provider has typically only a few but very large ranges of IP addresses. Thus spoof filtering to protect other IP address ranges is very easy to them.

As mentioned above, testing connectivity through the client does not work, if the client answers back with its own private IP-address as the source-address. If the client is connected via a DSL-router, the source address of the client is replaced by the official IP-address assigned to the router by the internet-provider. By this, the source spoof protection of the provider finds nothing to complain and lets the ICMP-Echo-Reply pass. So in the end the solution works, if source NAT is done at the edge of the illegal internet breakout. However, if the client is connected via dial up by using its own modem or ISDN-adapter, the source address of the ICMP-Echo-Reply is not changed. Unfortunately there is no way to force the client to use the IP-address assigned to the dial up connection as source address, as the ICMP-Echo-Request was pointing to the IP address of the client on the LAN. Fig. 4 shows this problem. Thus, if a client is connected to the internet via a dial up connection, sending packets over the internet cannot be used as a solution to find internet leakages, as the packets are considered to be spoofed and are discarded by the provider.

It is the object of the present invention to provide a method for detecting, locating and identifying leakages in a computer network. This object is achieved with the features of the claims.

The basic concept underlying the present invention is described in the following.

When a client does a dial up connection, its default gateway is changed to the provider network instead of the corporate network. This means that the client cannot communicate with other systems in the network, which are one or more router hops away. This happens because a client does not take part in the routing protocol of a network. Instead of this, the client only knows one single address - the default gateway - where it sends all its traffic to, unless a target is on the same subnet i.e., the same LAN.

Thus, when a client has no dial up connection, it is fully reachable from everywhere in the network; however, when the dial up connection is established, it cannot be reached by a remote (one or more router hops away) system of the corporate network.

The problem is now to distinguish between a client that just established a dial out connection and a client that simply went offline by shutting down or crashing or rebooting or by network failure. According to the present invention, this is achieved with ICMP-Host-Redirect. The basic idea is to set a host route into the client's routing table prior to the establishment of a dial up connection. This host route is not changed or overwritten when the default gateway is changed by the dial up procedure. It stays in the table and it is used if the client wants to send traffic to that specific host. This is due to the fact that a host route is more specific than a default route.

Thus, if there has been a host route inserted into the clients routing table prior to the dial up process and if this host route points to the corporate default gateway, the host specified in the host route can still communicate with the client, while all other remote corporate hosts can not. The trick is that for one host there is still a kind of "umbilical cord" leading from the client to the specific host set in the host route while there is no communication possible to hosts with other addresses outside the client's LAN.

So in the end, the core test according to the present invention is to try - after inserting the host route - whether the client can be reached by a normal host outside of the client's LAN and by the special "umbilical cord" host. If the normal host fails but the special host succeeds, there is something wrong with the client. In this situation one can be sure that the client's default gateway points to a system outside the corporate while the client is still connected to the corporate network. And this is typically provoked by a dial out connection to the internet.

The present invention provides a method of detecting, locating and identifying leakages in a computer network, comprising the steps of:
(a) setting a host route into the client to be tested for a first host;
(b) contacting the client from said first host for communicating from said first host with the client; and
(c) contacting the client from a second host being different from said first host for communicating from said second host with the client.

In the first step (a) the host route is implemented. It enables communication with the client to be tested regardless of its other routing settings. The second step (b) tests if the client is active. The third step (c) tests if its default route points into the corporate network. If, for some reason, the client was switched off just after step (a), this is detected in step (b) in that upon contacting the client from the first host no communication will be established. On the other hand, if the test in step (b) shows that the client is still active, step (c) reveals whether the client is still solely active in the corporate network or if the client is already connected to the outside. In the latter case, the request from the second host will fail because the default route no longer points to the computer/corporate network.

In more detail, the present invention provides a method of detecting, locating and identifying leakages in a computer network, comprising the steps of:
(1) detecting if a client to be tested is active at the current IP address under test;
(2) setting a host route into the client for a first host to a non-functional gateway;
(3) testing if the setting of the host route was successful
(4) changing said client's host route for said first host back to the original default gateway;
(5) testing from a second host if the client can be reached via its default route;
(6) testing from the first host if the client can still be reached via the host route;

The method according to the present invention basically comprises two phases, phase 1 and phase 2. Phase 1 is used for setting and checking the host route, and phase 2 is used to actually find the leaky client. Phase 1 and phase 2 are basically identical, the only difference is the state of the client. In phase 2, the state of the client has changed, it has set up a dial up connection.

In step 1 of phase 1, the active clients of a network or subnet are detected (phase 1, step 1). This reduces the overall data traffic, since all following steps can be focussed on just said active clients. Once an active client has been detected, the gateway for the first host "INT.S1" is changed (phase 1, step 2). This gateway change results in an additional entry in the routing table (Windows) or the routing cache (Linux) of the client. In this step, the host route is set to a non-functional gateway. This is done for two reasons. On the one hand, the new host gateway has to differ from the old gateway for that host which was in this case the default gateway. Otherwise it is not implemented into the table. On the other hand, it is to be tested whether the ICMP-Host-Redirect was successful.

Preferably, this step is then followed by a testing step for testing the performed gateway change (phase 1, step 3). This testing step is optional and, alternatively, it is just assumed that the gateway change was indeed successful. It has been successful if the client does not answer back if pinged - or otherwise contacted - by said first host INT.S1 because the host route for this host points to a non-functional gateway. There are three typical reasons for a failed ICMP-Host-Redirect, i.e., (i) the ICMP Redirect is disabled on the client, (ii) the default gateway is wrong, and (iii) the fake gateway is not available. With regard to alternative (i), i.e., disabled ICMP Redirect, it is possible - e.g., by changing registry keys in Windows - to disable the acception of redirects on a client. If this is the case, the redirect will fail. This gives a hint for clients with special (i.e., non-standard) configurations. As regards alternative (ii), the client accepts a redirect only if the source IP address of the redirection packet is the very IP, that is the actual gateway for that host. So the ICMP-Host-Redirect-Packet has to have, e.g., the source IP "INT.R1" if the actual gateway is router R1. If the client's default gateway is not INT.R1 but another router connected to the corporate network, the redirect will fail. This gives a good hint for manual or wrong configured default gateways on clients. Finally (alternative (iii)), Microsoft clients do accept a redirect to a fake gateway, that is not active on layer 2 (MAC-layer). Linux clients do not. They check if the new gateway is available on layer 2 and only if this is the case, they place it in their route cache table.

This gives a good hint, that Linux clients are present in the network. A countermeasure - if Linux clients shall take part in the leak testing - is to not use a static, manually configured fake gateway but the active clients themselves in a round-robin-fashion.

In the next step, the host route is changed back to the original default gateway (phase 1, step 4). Fortunately, the host route is inserted separately and is not summarised with the default route. By this, the "umbilical cord" back to the first host is finally established. However, it is to be noted that this host route will not stay there forever, it will time out (i.e. after 10 minutes in a Microsoft client), so a complete phase has to be done at least before the timeout period ends, preferably half the timeout period to leave some time for differences in the network speed and other time consuming processes.

The foregoing step is preferably followed by a default gateway testing step (phase 1, step 5). The default gateway is tested using a second host. This optional step is not necessary in phase 1. It is used in phase 2 to detect the leak. But to keep phase 1 identical to phase 2 for the sender, it is also preferably done in phase 1. The background is, that the sender does not have to keep track of the state of the clients as phase 1 and phase 2 only differ by the state of the client. A detailed description of this step follows below with regard to phase 2.

Further optionally, the client is tested by the host route, i.e., the first host in phase 1 (phase 1, step 6). This optional step is not necessary in phase 1 like the preceding step. It will be used in phase 2 to detect if the client is still active. Thus, in case the previous step did not give a reply because the client went down during that phase and not because of a leak, a wrong alarm is prevented in this preferred embodiment. A detailed description of this step will be given in phase 2.

In the following, phase 2 of the method according to the present invention will be described. This phase is basically identical to phase 1 (apart from the steps being preferred in phase 1). The basic difference is the state of the client. It has now a dial up connection established and a host route set. The result of phase 2 differs now from the result in phase 1 due to the established dial up connections, so this phase 2 is explained as a separate phase. The phase 2 is preferably repeated over and over again to permanently watch the clients in the segment.

In the first step of phase 2 (phase 2, step 1), the active clients are detected from said first host in the same way like in phase 1, as both phases are identical from the point of view of the sender. If phase 1 has placed a host route into the client, this step will discover even clients with an active dial up connection as the more specific host route is used. By this, the sender does not have to keep track between phases. Clients that went down between phases are simply not checked any further. But as the host route is cleared off the table after a timeout period (10 minutes in a Microsoft client), it is important, that phase 2 is done before a host route timeout occurs on the client.

Upon detection of active clients in step one of phase 2, in the following step the host route is changed to a fake host gateway - either a static one or a dynamic one if also Linux clients shall take part in the leak detection (phase 2, step 2). The client will accept this redirect as the source IP of the redirect packet is the IP of the default gateway (if this is phase 1 to the client because it booted recently) or because it is the gateway to the first host (e.g., "INT.S1 ") (if this is phase 2 to the client). Either way, the redirect is legal to the client and it should accept the redirect.

This gateway change is then tested by the next step (phase 2, step 3). In this step, the success of the redirection is tested. If the test fails, there will be a notification and the client won't take part in any ongoing tests in the current cycle to save bandwidth. For reasons of failing have a look at the same step in phase 1. After the gateway change test, the gateway is changed back in the following step (phase 2, step 4). In this step, the host route for the first host (e.g., INT.S1) is set back to its prior state pointing to the corporate default gateway of that LAN. By this, the timer for this host route is reset and thus the host route will be there for another timeout period (10 minutes on a Microsoft client). Thus, as long as the next cycle of phase 2 will be applied to the clients in this segment prior to the timeout, the host route will be renewed again and again, even if the client is still connected to the internet via a dial up connection.

In the next step the default route is the tested (phase 2, step 5). This step is finally the focus point of the whole effort. In this step, the default gateway setting (as opposed to the host route setting for INT.S1) is tested. This is done by communicating - e.g., by ICMP-Echo-Request & -Reply - with the client using a second host (e.g., INT.S2) as the source IP of the host. As a second host is used as source, the host route will not be used but the default route pointing to the default gateway will. Hence, basically, if the first host gets an answer whereas the second host does not, there is something wrong with the default gateway configuration on the tested client.

Step five of phase 2 was a test if the default route is pointing to a gateway outside the corporate network. But no message was created during that step, even if there was no answer back to the second host, which indicates a suspect client. The reason is that the client could have failed to answer, because it went offline during this phase. This would have led to a false alarm. Thus, finally, the client is tested again via the first host route to check it is still online (phase 2, step 6). Only if the client is still online but failed to answer back to the second host in the prior step, a warning concerning a possibly leaky client is created.

After step six, the phase 2 preferably starts over and over again. It should start some time before the host routes in the clients are timing out. Half the timeout period is a good value to start, as this leaves enough time for process and network latencies.

The present invention is not limited to the ICMP for setting the host routes. Alternatively to ICMP, every protocol that is capable of changing the host gateway of a client can be used. However, ICMP is preferred as it is implemented in all IP stacks by default and as "ICMP Redirect" has been designed to do so.

The presented invention is also not limited to ICMP for testing the reachability of the client. Every IP protocol, to which the client reacts, is suitable, as the only interesting thing is, if an answer is sent back at all and not what the content of the answer is.

The present invention is not limited to dial up connections. The invention is applicable to other internet connections including but not limited to cable modems, leased line, ISDN, dial-up, i.e. in general to all internet connections from layer 1 up to layer 3 according to the OSI network layer model, as long as it involves a configuration of the default gateway on a client, that differs from the corporate standard.

The method according to the present invention is advantageous in that it detects illegal internet connections regardless of
- Operating system
- Installed software
- Management access to the client
- Purpose of the client
- Routing enabled or not
- Direct dialup or DSL router connection

According to the invention, this is achieved with standard protocols without using a software client or any other changes on the tested components. The components do not even have to be a computer. It could be a print server, a switch with a management IP Stack, a DSL-Router or an IP-phone as long as it has an IP stack.

Hence, the method according to the present invention is capable of detecting illegal internet connections if they are done in the most typical ways. By this, it closes one major gap in securing a corporate network.

As a reply to the identified leakage, the network management system, for example, extracts the name of the user of the leaky client from its management database and sends an email or a SMS to this user. In addition or alternatively, the network management system could disconnect the port the leaky client is attached to.

The invention will now be described with reference to accompanying drawings in which:
- Fig. 1: shows the problem of network leakage of a corporate computer network connected to the internet;
- Fig. 2: shows a first conventional approach for detecting, locating and identifying network leakages;
- Fig. 3: shows the network leakage detection, location and identification according to a second conventional approach;
- Fig. 4: shows the problem associated with a client being connected to the internet via a dial up connection;
- Fig. 5: shows the detection of all active clients in a subnet (phase 1, step 1);
- Fig. 6: shows the host gateway change on a client (phase 1, step 2);
- Fig. 7: shows testing of the host gateway change on a client (phase 1, step 3);
- Fig. 8: shows changing back the host gateway to the original default gateway, leaving a host route in the table of a client (phase 1, step 4);
- Fig. 9: shows testing the client by its default route (phase 1, step 5);
- Fig. 10: shows testing the client by its host the route (phase 1, step 6);
- Fig. 11: shows the detection of active clients in a subnet (phase 2, step 1);
- Fig. 12: shows the host gateway change on a client (phase 2, step 2);
- Fig. 13: shows testing of the changed host gateway on a client (phase 2, step 3);
- Fig. 14: shows changing back the host gateway on a client (phase 2, step 4);
- Fig. 15: shows testing the client by its default route (phase 2, step 5); and
- Fig. 16: shows testing the client by its host route (phase 2, step 6).

A preferred embodiment of the present invention is now described in detail with reference to the accompanying Figures.

### Phase 1 - Setting and checking the host route

In phase one, the client has no dial up connection. This is the phase in which the host route is placed into the clients. Phase 1 and phase 2 are identical, the only difference is the state of the client. So whether it is phase 1 or phase 2 depends on the state of the client and not on the state of the testing host.

### Phase 1, Step 1: Detect active client

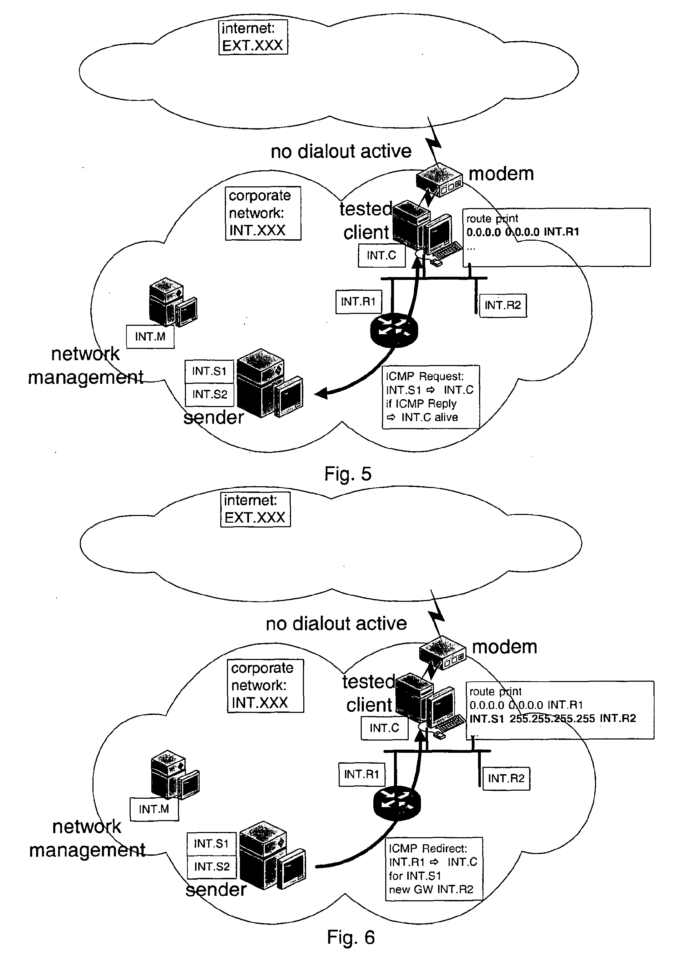

In this (optional) step all active clients in a subnet are detected. Only for the active clients further steps are taken. This minimises the traffic sent over the corporate network INT.XXX. Step 1 is shown in Fig. 5. A sender sends ICMP Requests INT.S1 to the tested clients INT.C via router INT.R1. The default route of the client points to the default gateway in that subnet, as the result of the "route print"-command on the client is "0.0.0.0. 0.0.0.0. INT.R1". If an ICMP Reply is received by the sender, the sender knows that the tested client is alive.

### Phase 1, Step 2: Change Host Gateway

In this step, the gateway for the first host "INT.S1" is changed (see Fig. 6). In the shown embodiment, the gateway is changed to the router R2. The ICMP Redirect sent from the sender to the client instructs the client to use INT.R2 for replies to the first host INT.S1. This results in an additional route entry "INT.S1 255.255.255.255 INT.R2" in the routing table (Windows) or the routing cache (Linux). The host route is set to a non-functional gateway. This is done for two reasons. The first reason is that the new host gateway has to differ from the old gateway for that host which was in this case the default gateway. Otherwise it is not implemented into the table. The second reason is to test if the ICMP-Host-Redirect was successful. This is shown in the next step.

### Phase 1, Step 3: Test Host Gateway Change

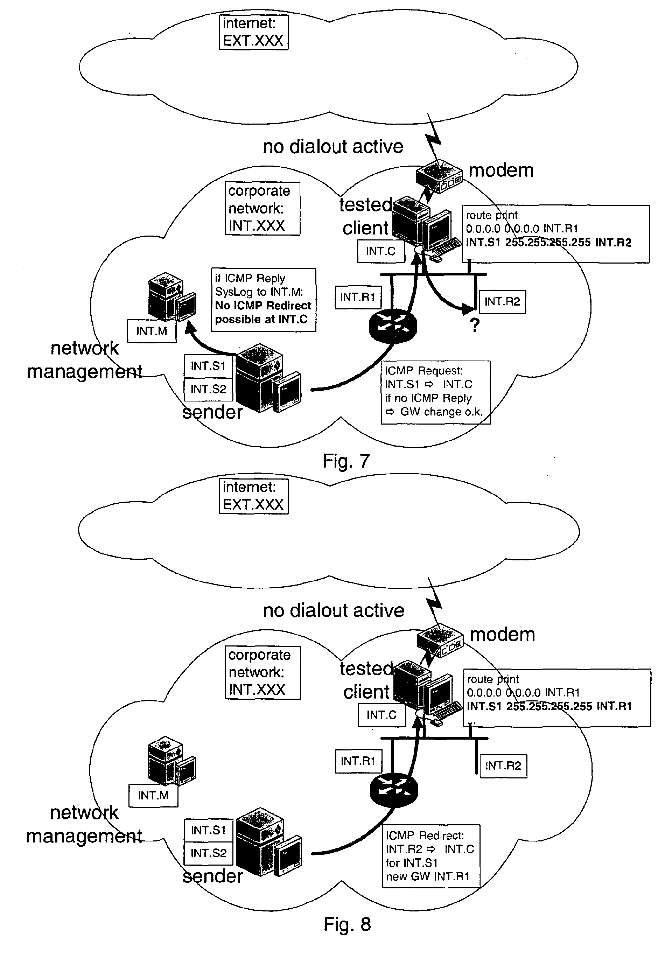

In this (optional) step a test is performed, if the ICMP-Host-Redirect was successful (see Fig. 7). It has been successful if the client does not answer back if pinged - or otherwise contacted - by first host INT.S1, as the host route for this host points to a non-functional gateway. As shown in the Figure 7, the ICMP Request from INT.S1 to INT.C is in fact tried to return via INT.R2, i.e., no ICMP Reply is received at the sender. The typical reasons for a failed ICMP-Host-Redirect are

### ICMP Redirect disabled on the client

It is possible - e.g., by changing registry keys in Windows - to disable the acception of redirects on a client. If this is the case, the redirect will fail. This gives a hint for clients with special (i.e., non-standard) configurations.

### Wrong default gateway

The client accepts a redirect only if the source IP address of the redirection packet is the very IP that is the actual gateway for that host. So the ICMP-Host-Redirect-Packet has to have the source IP "INT.R1". If the client's default gateway is not INT.R1 but another router connected to the corporate network, the redirect will fail. This gives a good hint for manual or a wrong default gateway configuration on a client.

### Fake gateway not available

Microsoft clients do accept a redirect to a fake gateway, that is not active on layer 2 (MAC-layer). Linux clients do not. They check if the new gateway is available on layer 2 and only if this is the case, they place it in their route cache table. A countermeasure is to not use a static, manually configured fake gateway but the active clients themselves in a round-robin-fashion.

### Phase 1, Step 4: Chanqe Host Gateway Back

In this step the host route on the client for the first host is changed back to the original default gateway INT.R1. Thus, the entry in the table at the client is now "INT.S1 255.255.255.255 INT.R1". Fortunately, the host route is inserted separately and is not summarised with the default route. By this, the "umbilical cord" back to INT.S1 is finally established. Be aware that this host route will not stay there forever, it will time out after a timeout period (10 minutes on a Microsoft client), so a complete phase has to be done at least before the timeout occurs on the client, preferably in half the timeout period to leave some time for differences in the network speed.

### Phase 1, Step 5: Test Default Gateway

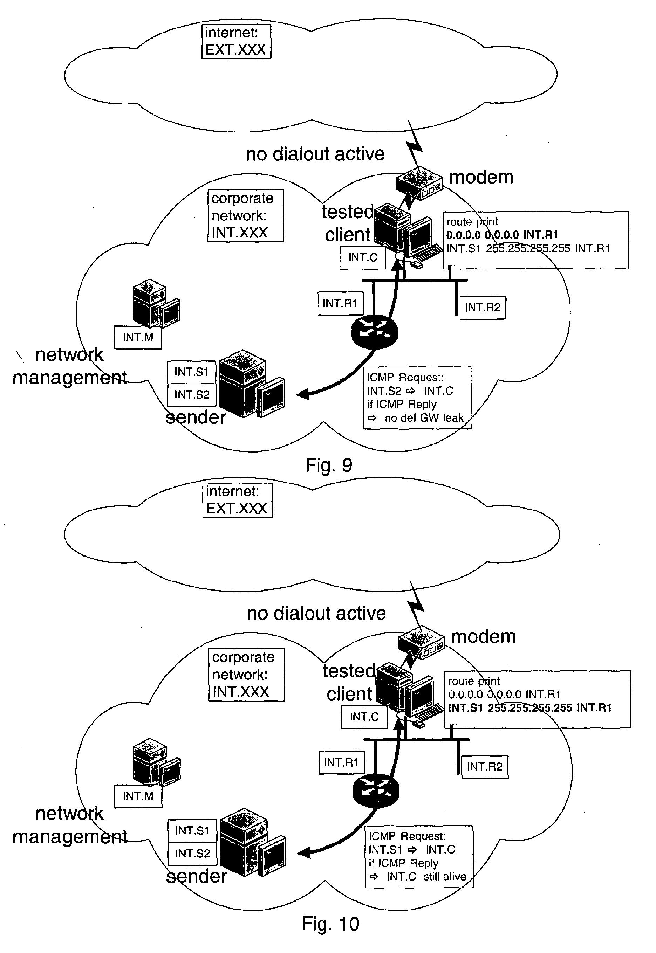

The default route of the client is now tested. An ICMP Request is sent from a second host INT.S2 to INT.C. If there is a reply, there is in fact no leak at the client, and it is confirmed that not only for INT.S1 the replies are sent to INT.R1 ( via the route "INT.S1 255.255.255.255 INT.R1") but any reply (via the route "0.0.0.0 0.0.0.0 INT.R1"). This optional step is not necessary in phase 1. It is used in phase 2 to detect the leak. But to keep phase one identical to phase 2 for the sender in the present preferred embodiment, it is also done in phase 1 (see Fig. 9). The background is that the sender does not have to keep track of the state of the clients as phase 1 and phase 2 only differs by the state of the client. A detailed description of this step will be given in phase 2.

### Phase 1, Step 6: Test Client by Host Route

This optional step (see Fig. 10) is not necessary in phase 1 like the step before. It will be used in phase 2 to detect if the client is still active. An ICMP Request is sent to INT.C from INT.S1. If there is a reply, the client is apparently still alive. Thus, if the step before did not give a reply because the client went down during that phase and not because of a leak, a wrong alarm is prevented. A detailed description of this step will be given in phase 2.

### Phase 2 - Finding the leaky clients

This phase is in this preferred embodiment identical to phase 1. The only difference is the state of the client. It has now a dial up connection established. The result of the phase 2 differs now from the result in phase 1 due to the established dial up connections, so this phase is considered as a separate phase in the context of the present invention. The phase will be repeated over and over again to permanently watch the clients in the segment.

### Phase 2, Step 1: Detect active Client

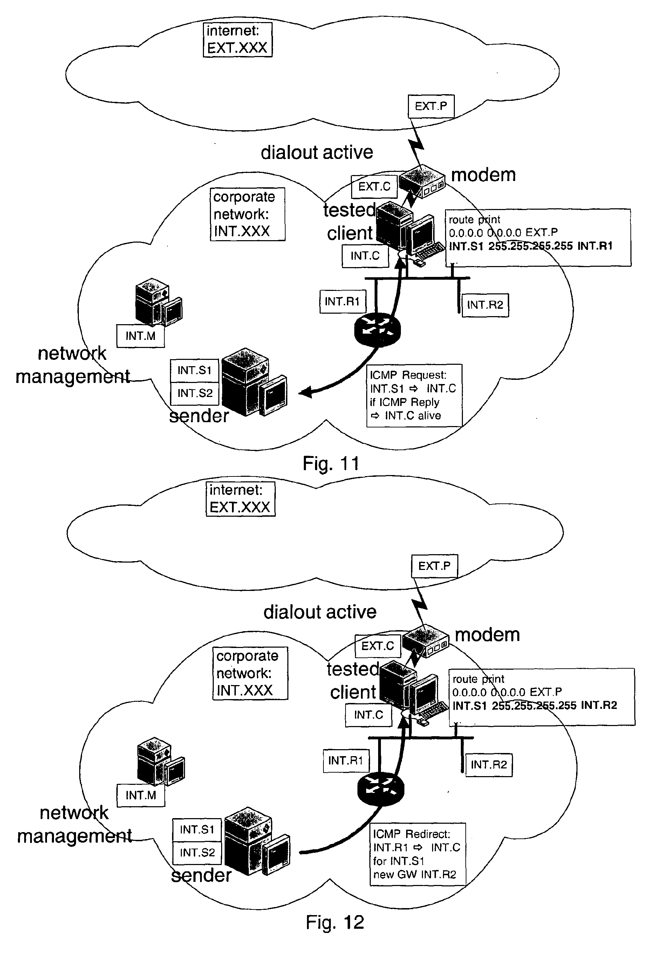

In this step (see Fig. 11), the active clients are detected in the same way like in phase 1, as both phases are identical from the point of view of the sender. If phase 1 has placed a host route into the client (i.e., "INT.S1 255.255.255.255 INT.R1"), this step will discover even clients with an active dial up connection ("0.0.0.0 0.0.0.0 EXT.P") as the more specific host route is used. By this, the sender does not have to keep track between phases. Clients that went down between phases are simply not checked any further. But as the host route is cleared off the table after a timeout period (10 minutes on a Microsoft client), it is important that phase 2 is done within that timeout period.

### Phase 2, Step 2: Change Host Gateway

In this step the host gateway is (again) changed to a fake host gateway INT.R2 - either a static one or a dynamic one if also Linux clients shall take part in the detection process. The client will accept this redirect as the source IP of the redirect packet is the IP of the default gateway INT.R1 (if this is phase 1 to the client because it booted recently) or because it is the gateway to host "INT.S1" (if this is phase 2 to the client). Either way, the redirect is legal to the client and it should accept the redirect. This step is shown in Fig. 12. The ICMP Redirect from INT.R1 informs the client that for INT.S1 the new gateway is INT.R2.

### Phase 2, Step 3: Test Host Gateway Change

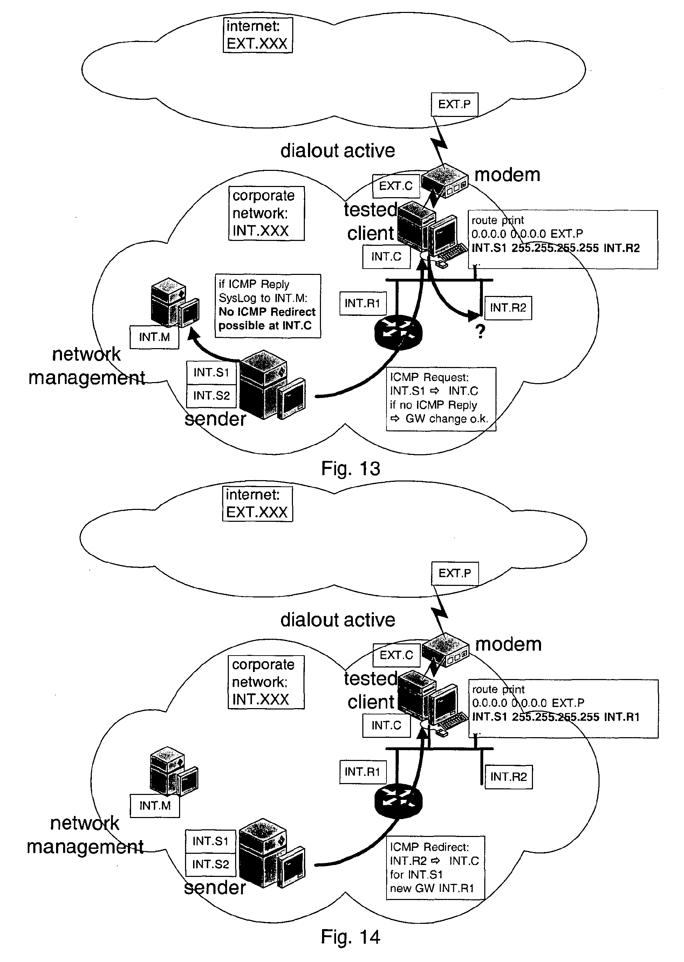

In this step (Fig. 13) the success of the redirection is tested. An ICMP Request is sent from INT.S1 to INT.C. In case there is no reply to INT.S1, the gateway change took place as intended because the reply was apparently sent to INT.R2. If the test fails, there will be a notification. For reasons of failing have a look at the same step in phase 1.

### Phase 2, Step 4: Change Host Gateway back

In this step, the host route for INT.S1 is set back to its prior state pointing to the corporate default gateway INT.R1 of that LAN. By this, the timer for this host route is reset and thus the host route will be there for another timeout period. Thus, as long as the next phase will be applied to the clients in this segment prior to the timeout on the client, the host route will be renewed again and again, even if the client is still connected to the internet via a dial up connection.

### Phase 2, Step 5:Test Default Gateway

This step is finally the focus point of the whole effort. In this step the default route (as opposed to the host route for INT.S1) is tested. This is done by communicating - e.g., by ICMP-Echo-Request & -Reply - with the client using second host INT.S2 as the source IP of the host. As INT.S2 is used as source, the host route INT.R1 will not be used (since the entry "INT.S1 255.255.255.255 INT.R1" only applies for INT.S1) but the default route ("0.0.0.0 0.0.0.0 EXT.P") will. Thus, basically, if INT.S1 gets an answer in the previous testing steps whereas INT.S2 does not, there is something wrong with the default gateway. The ICMP Reply from INT.C to INT.S2 is in fact directed to EXT.P according to the default gateway. However, EXT.P does not know a route to INT.S2. Moreover the source address of the reply packet - INT.C - is interpreted as a spoofed source IP, as it is not identical with EXT.C, which was assigned to the client by the provider. This is the reason, why the ICMP reply from the client to INT.S2 via EXT.P is dropped by the provider.

### Phase 2, Step 6: Test Client by Host Route

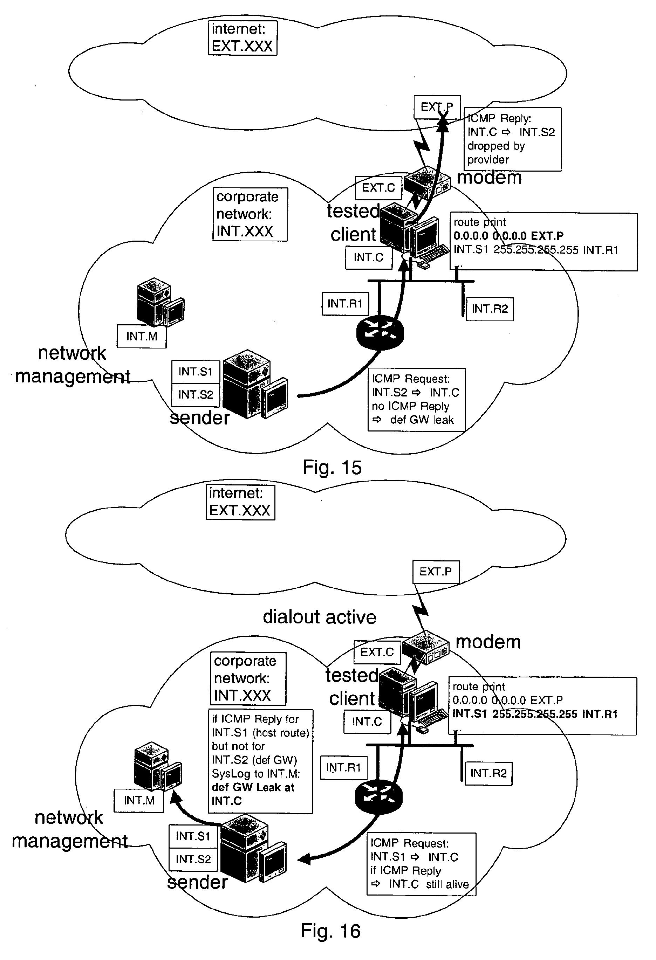

The prior step 6 a test was done, if the default gateway is pointing outside the corporate network. But no message was created during that step, even if there was no answer back to INT.S2. The reason is that the client could have went offline during this phase and this would have led to a false alarm. So this final step (Fig. 16) tests again via the host route to INT.S1 via INT.R1, if the client is still online. Only if the client is still online, but failed to answer back to INT.S2 in the prior step, a warning concerning a possibly leaky client is created. In particular, a warning is sent to the network management INT.M.

After this step, the phase 2 starts over and over again. It should start some time before the host routes in the clients are timing out. Half the timeout period (equals 5 minutes for Microsoft clients) is a good value to start, as this leaves enough buffer for process and network latencies.

### Choosing the riaht addresses for the sender

When a client dials into the internet, it typically cannot reach any longer the corporate resources like mail- or file-server or the corporate intranet. This is annoying to the user, as he has to close the internet dial up connection to reach the corporate resources again. An advanced user could do the following. He retrieves - or simply guesses - the summarised IP network the corporate is using internally. Let's assume the corporate uses in the local segment of the client the network 10.26.35.0 with a mask of 255.255.255.0 and the default gateway 10.26.35.1. All this information is visible to the client. So it would be a good guess that the corporate is using the network 10.0.0.0 255.0.0.0 as the supernet for all their internal corporate networks. The user could now add the rout 10.0.0.0 255.0.0.0 10.26.35.1 to the routing table of his client and make this a static entry. He could now connect in parallel to the internet via dial up and to the corporate resources.

If the addresses of the sender - INT.S1 and INT.S2 - are also part of the range 10.0.0.0 255.0.0.0, the test would not detect the leaky client, although there is a dial up connection to the internet.

The solution to this is to use IP addresses for the sender, which are not part of the typical supernetted network of the corporate. A route for this unusual segment should be injected into the routing protocol so that the sender is reachable by all clients via the default gateways in every LAN segment. By this, the static entry in the routing table set by the user does not include the sender's addresses and the process works as designed.

## Claims

1. A method of detecting, locating and identifying leakages in a computer network, comprising the steps of:
(a) setting a host route into the client (INT.C) to be tested for a first host (INT.S1);
(b) contacting the client (INT.C) from said first host (INT.S1) for communicating from said first host with the client; and
(c) contacting the client (INT.C) from a second host (INT.S2) being different from said first host for communicating from said second host with the client.

2. The method of claim 1, wherein step (a) comprises the steps of:
(1) setting a host route into the client (INT.C) for said first host (INT.S1) to a non-functional gateway (INT.R2);
(2) testing if the setting of the host route in step (1) was successful;
(3) changing said client's host route for said first host (INT.S1) back to the original default gateway (INT.R1).

3. The method of claim 1, 2, or 3, further comprising the step:
(a') detecting from said first host (INT.S1) whether the client (INT.C) to be tested is active at its current IP address under test;
wherein step (a') precedes step (a).

4. The method of claim 1, 2 or 3, wherein steps (a) to (c) or (a') to (c), respectively, are repeated after a predetermined time.

5. The method of any of the preceding claims, wherein a leakage detected at step (c) is reported to the network management (INT.M).

6. The method of any of the preceding claims, wherein ICMP-Echo-Request & -Reply is used for communication.

7. The method of any of claims 4 to 6, wherein said predetermined time is 10 minutes, preferably 5 minutes.

8. The method of any of claims 5 to 7, wherein the network management disconnects the detected leaky client from the network.

9. The method of any of the preceding claims, wherein IP addresses are used that are not part of the supernetted network.
